# EUROPEAN PATENT APPLICATION

(11) **EP 2 066 090 A1**
(43) Date of publication of application: **03.06.2009**
(21) Application number: 07121843.2
(22) Date of filing: 29.11.2007
(51) Int. Cl.: H04L 29/06, H04L 29/08

(54) **Initiation of dynamic sessions**

(71) Applicant: Nokia Siemens Networks Oy, 02610 Espoo (FI)
(72) Inventor: Dostal, Pavel, 79828, Morice (CZ); Sedlacek, Ivo, 66434, Kurim (CZ)
(74) Representative: Honkasalo, Terhi Marjut Anneli

(57) **Abstract**

User-specific information and associated authorization rules are maintained in a telecommunication system. Members for a group session are selected by comparing the user-specific information of users of the telecommunication system to a selection condition. The selection condition is compared with the user-specific information of users regardless of the associated authorization rules, and a user is selected as a member of the group session when the user-specific information matches the selection condition. A privacy procedure is used to hide the identity of at least one user from other members of the group session.

## Description

### FIELD OF THE INVENTION

The present invention relates to telecommunications, and more particularly to communication in groups.

### BACKGROUND OF THE INVENTION

The Open Mobile Alliance (OMA) is a standards body that develops open standards for the communications industry. The OMA restricts itself to the standardization of applicative protocols and presumes the existence of a networking technology specified by outside parties. OMA specifications are agnostic of the particular cellular network technologies used to provide networking and actual data transport. For example, OMA specifications for a given function are the same with GSM, UMTS or CDMA2000 networks.

OMA Push To Talk over Cellular (PoC) service is a two-way form of communications that allows users to engage in immediate communication with one or more users. PoC service is similar to a "walkie-talkie" application where a user presses a button to talk with an individual user or broadcast to a group of participants. PoC has already evolved though a series of versions: PoCv1.0 allowed communication using voice only, PoCv2.0 allows also video and text messaging.

PoC provides several different types of sessions. In a pre-arranged PoC group session participants are defined in beforehand, and a PoC server invites the rest of the members when the first participant joins. A chat PoC group session is addressed with a predefined identifier, and users join and leave the chat PoC group as they like. In an ad-hoc PoC session participants are provided by the client in a SIP request. One-to-one PoC session refers to an ad-hoc PoC session with only two participants.

To complement these, the Push-To-Talk over Cellular v2.1 proposes that a session could be set up also based on a provided condition, which when evaluated results to the list of the participants. In this text such type of session is referred to as a dynamic session. The condition can contain criteria for any type of user-specific information, like presence, location, profile information or any other type of information. In the dynamic session the initiator of the group session or the owner of the predefined group specifies the condition. A server system evaluates the condition and invites the resulted list of the participants to the session. After the session is set up, the initiator can see the list of the participants like in the normal session.

The problem in such arrangement is that the initiator does not necessarily have permission to access the user specific information that should be used as a basis for checking the condition. For example, if an initiator X sets up a dynamic session with condition "any participant in Vienna", the server may evaluate the condition and invite participants Y and Z to the session. The server would also provide the initiator X with the session participant list. However, on the basis of such list the initiator X would immediately know that participants Y and Z reside presently Vienna. However the participants Z and Y would not in every case wish to grant initiator X the permission to see their location.

In order to protect the privacy of the users, servers allowing access to user-specific information are typically configured with authorization rules. Users are generally cautious and do not wish to expose their private information to larger groups of other users. This means that information that would be most interesting for defining the conditions for the dynamic sessions, like presence, location, profile data, are in most cases restricted to very limited use by small and well-known group of other users. In case searches for matching users are to be limited according to these strict limitations, the proposed possibility to initiate sessions by means of conditions will have none or only a very limited value for practical applications.

### BRIEF DESCRIPTION OF THE INVENTION

An object of the present invention is thus to alleviate the above mentioned problem. The object of the invention is achieved by a method, a network node and a computer program product, which are characterized by what is stated in the independent claims. The preferred embodiments of the invention are disclosed in the dependent claims.

In the proposed solution the search for potential participants for a dynamic group call is first performed without attending to the privacy considerations. A procedure for ensuring the privacy of the searched users is then performed before the identity information to the other members of the group is exposed.

By means of the proposed procedure the members of the group may be searched from a large group of users and the possibility to find appropriate matches for the condition increases significantly. However, this is achieved without compromising the privacy of the system. Different embodiments of the invention have separate advantages that will be dealt with separately with their detailed description.

### BRIEF DESCRIPTION OF THE DRAWINGS

In the following the invention will be described in greater detail by means of preferred embodiments with reference to the attached drawings, in which
Figure 1 illustrates a public land mobile network infrastructure;
Figure 2 illustrates an embodiment for a server system and associated user equipment shown in Figure 1;
Figure 3 illustrates an example of protecting the privacy of group members in a group communication activity; and
Figure 4 illustrates an example of protecting the privacy of group members in another group communication activity;
Figure 5 illustrates an exemplary hardware configuration for the implementation of an embodied device.

### DETAILED DESCRIPTION OF SOME EMBODIMENTS OF THE INVENTION

It is appreciated that the following embodiments are exemplary. Furthermore, although the specification may in various places refer to "an", "one", or "some" embodiment(s), reference is not necessarily made to the same embodiment(s), or the feature in question does not only apply to a single embodiment. Single features of different embodiments may be combined to provide further embodiments.

The invention is applicable to any communications system capable of providing communication activities in groups to which participants may be collected using a selection condition, the fulfilment of which is determined on the basis of user specific information maintained in the communications system. In the following, the present invention will be described by means of a Push-to-talk over Cellular (PoC) media communication service in a third generation mobile communication system, without limiting the invention to this specific service or the terms used in the description of the embodiment.

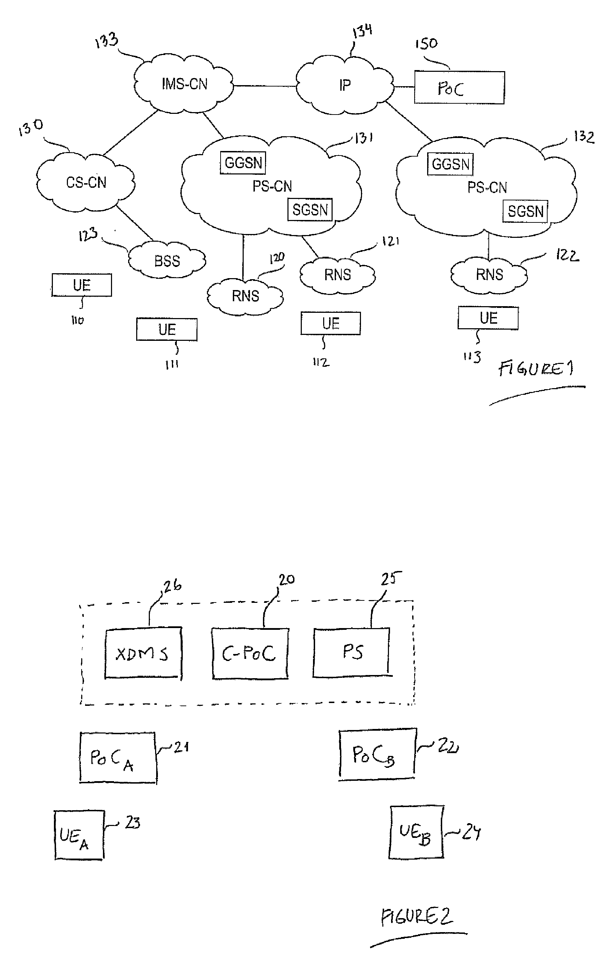

As illustrated in Figure 1, in the third generation (3G) mobile communications systems, a public land mobile network (PLMN) infrastructure may be logically divided into core network (CN) 130, 131, 132, 133, 134 and access network (AN) infrastructures 120, 121 ,122 ,123. The access network AN refers to an infrastructure of points or nodes interconnected by communication paths. AN enables transmission of signals between users and the core network. Examples of access networks comprise base station subsystem (BSS) 123 for GSM, and radio network subsystem (RNS) or a radio access network (RAN) 120, 121, 122 for UMTS.

In the technical specifications of a third generation partnership project (3GPP), the core network CN is logically divided into a circuit switched (CS) domain 130, a packet switched (PS) domain 131, 132 and an IP multimedia subsystem (IMS) 133. The CS domain refers to a set of all CN entities offering a circuit switched type of connection for user traffic, as well as all the entities supporting the related signalling. A circuit switched type of connection is a connection for which dedicated network resources are allocated upon connection establishment and released upon connection release. A packet switched type of connection transports user information in packets so that each packet can be routed independently of a previous one. Examples of the PS domain include GPRS (General Packet Radio Service), and typical entities include a serving GPRS support node (SGSN) and a gateway GPRS support node (GGSN). The IP multimedia subsystem comprises CN elements for provision of multimedia services. The IP multimedia subsystem IMS 133 utilizes the PS domain to transport multimedia signalling and bearer traffic.

In voice communication with a "push to talk/release to listen" feature, a call may be based on the use of a pressel (push-to-talk switch) in a telephone as a switch: by pressing a pressel the user indicates his or her desire to speak, and the user equipment sends a service request to the network. Alternatively, a voice activity detector (VAD) or any suitable means can be used instead of the manual switch. The network either rejects the request or allocates the requested resources on the basis of predetermined criteria, such as availability of resources, priority of the requesting user, etc. At the same time, a connection is also established to a receiving user, or users in the case of group communication. After the voice connection has been established, the requesting user can talk and the other users can listen. When the user releases the pressel, or in the case of traffic inactivity, the event is detected in the network, and the resources may be released and/or a talk item may be granted to another user.

A server system 150 for provision of Push-to-talk Over Cellular (PoC) is illustrated as provided on top of the Packet Switched (PS) core network. The Packet Switched (PS) core network 131, 132, 133 of Figure 1 provides packet mode (e.g. IP) communication services to User Equipment (UE) 110, 111, 112, 113. UE accessing the PS CN, and the PS core network itself, utilizes the services provided by a Radio network subsystem (RNS) or Radio access network (RAN) 120, 121, 122, 123 to provide packet-mode communication between the UE and a PS CN subsystem. The multiple access method employed in an air interface in the RAN may be Time Division Multiple Access (TDMA), Frequency Division Multiple Access (FDMA), Code Division Multiple Access (CDMA), or any combination thereof.

Figure 2 illustrates an embodiment for a server system 150 and associated user equipment. In view of the description of Figure 1 a man skilled in the art is able to understand the interconnectivity of the elements of Figure 2. The description thus concentrates to the roles and function of the elements in implementing the embodied operations.

Due to the great interest in the PoC services, individual vendors provided early adoptions of the emerging technology, primarily in the form of standalone PoC systems. Since then a group of interested organizations prepared an industry specification for PoC, with the aims of following existing 3^{rd} Generation Partnership Project (3GPP) IP Multimedia Subsystem (IMS) specifications. The standardization work to this direction has since then continued in Open Mobile Alliance (OMA) using the existing set of specifications as a starting point.

A PoC communication service is typically implemented with a communication server system while client applications reside in the user equipment or terminals. Establishment of connections in a PoC system is implemented using the mechanisms of a Session Initiation Protocol (SIP).

The embodied service system of Figure 2 shows three PoC servers 20, 21, 22. In general, a PoC server comprises a group of management plane functions, control-plane functions and user-plane functions for implementing the application level network functionality for the PoC service. For example, PoC server may act, according to the application, as the end-point of SIP, Real-time Transport Protocol (RTP) and Real-time Transport Control Protocol (RTCP) signaling, provide SIP session handling, policy control for access to groups, group session handling, access control, do-not-disturb functionality, floor control functionality, talker identification, participants information, quality feedback, charging reports and media distribution.

A PoC server may perform a controlling PoC function or participating PoC function or both. The controlling PoC function and participating PoC function are different roles of the PoC server. In Figure 2 there is shown C-PoC 20 illustrating a PoC server with the controlling PoC function and PoC_{A} 21 and PoC_{B} 22 illustrating PoC server with the participating PoC server function. It is noted that even if the elements are shown as separate entities, a PoC server may perform both a controlling PoC function and a participating PoC function at the same time. In a PoC session there is one participating PoC function per PoC client, but the PoC server may support simultaneous PoC sessions for the PoC client.

The determination of the PoC server role takes place during the PoC session setup and lasts for the duration of the whole PoC session. For different kinds of sessions there are typically default definitions on the server to perform the controlling PoC function. In addition there exist typically some mutually agreed service provider policies according to which a PoC server may instead select another PoC server to perform the controlling PoC function. There is only one PoC server performing the controlling PoC function in a PoC session.

The PoC server 20 performing the controlling PoC function has an equal amount of SIP sessions and media, talk burst control and media burst control communication paths in one PoC session as there are participants in the PoC session. The PoC server 20 performing the controlling PoC function does not have direct communication to the PoC clients (UE_{A}, UE_{B}) 23, 24 for PoC session signaling, but will interact with the PoC clients 23, 24 via the PoC servers 21, 22 that perform the participating function for the PoC clients 23, 24.

Typically the PoC server C-PoC 20 that performs the controlling PoC function routes media and media-related signaling, such as talk burst control messages to the PoC clients 23, 24, via the PoC servers PoC_{A} 21, PoC_{B} 22 that perform the participating PoC function. A PoC server 21 performing the participating PoC function has always a direct communication path with a PoC client 23 and also a direct communication path with the PoC server 20 performing the controlling PoC function for PoC session signaling.

The Presence Server 25 is an entity that accepts, stores, and distributes presence information about PoC Clients. In general, presence information may be used as status indicator to describe user's communication status and willingness to communicate. Presence information may also be used as communication media describing user's context and mood, or interests. Other users can see the presence of the originator and the presence can be changed either automatically or by the originator. When a PoC client 24 provides presence information (presence state) to the Presence Server 25, it is stored in what constitutes his personal record and can be made available for distribution to other users (called watchers).

XML Document Management (XDM) is an OMA specification for accessing and manipulating XML documents stored in networked document repositories. The specification is based on the IETF XML Configuration Access Protocol (XCAP) and enables manipulation of individual XML elements and attributes instead of the whole XML document. The user's contact lists are stored on the shared XML document management (XDM) server in an application-independent format and can be shared also with other applications. PoC-specific data structures like PoC groups are stored in the XDM server 26. An operator may create static PoC Group identities and store them in the XDM server for use in PoC Group Sessions. A PoC User may create PoC Groups that are stored in the XDM server for use in PoC Group Sessions

In a conventional case, when a PoC User UE_{A} decides to initiate a PoC Session towards a pre-arranged PoC group, it generates a PoC session invitation that identifies the PoC group X. The invitation is routed from the PoC Client UE_{A} to the PoC Server C-PoC 20 that performs the controlling PoC function. C-PoC downloads from the shared group XDMS 26 a definition of the PoC group X. The definition comprises a list of members of the pre-arranged PoC group X. C-PoC sends PoC session invitations to the listed PoC users, of which in Figure 2 only an invited user UE_{B} 24 is shown. UE_{B} accepts the PoC session invitation and returns an OK response to C-PoC. In the response, the invited PoC User UE_{B} may request privacy. After a first one of the invited PoC Users has responded positively to the invitation, C-PoC sends a response carrying a positive acknowledgement to the inviting PoC Client UE_{A}. Unless the invited PoC Users requested privacy in their responses to the invitation, their real identities are disclosed to the other members of the group.

Let us assume that C-PoC finds out that the PoC group X identified in the invitation is a dynamic PoC group and that the members of the group are to be defined using a selection condition C1 that relates to user-specific information maintained somewhere in the communications system. Such condition could be, for example, "chess players with 10 km of Helsinki city center". User-specific information that allows comparisons to determine whether such condition is met is, in this exemplary case, maintained in the Presence Server PS 25. The current location information of the user may be used to determine his distance from Helsinki, for example by comparing the last GPS coordinate of the PoC user with a reference coordinate of Helsinki. Correspondingly, the presence information may comprise a user/specific profile that comprises a list of points of interests for the user. In case in the presence information of the PoC user the profile comprises a term *'chess'* and the distance to Helsinki is less than ten kilometers, the PoC user matches the condition C1.

Accordingly, C-PoC 20 generates to PS 25 a request using the selection condition C1. PS makes a corresponding search and returns a list of PoC user identities whose current profile and location match the given condition C1. C-PoC sends conventionally invitations to the PoC session to the PoC users identified in the list and after a first one of the invited PoC Users has responded positively to the invitation, sends a response carrying a positive acknowledgement to the inviting PoC Client UE_{A}. After this any of the inviting PoC user UE_{A} and the invited PoC users may subscribe for the participant information of the PoC session.

However, information dealing with some of the conditions is typically considered private. In order to protect such private information, access to it is protected by one or more authorization rules. Such authorization rules may be stored in the server or may be made accessible to the server dealing with the user-specific information. For example, in a typical use case the authorization rules could be adjusted to limit access to location information of UE_{B} maintained in the presence server PS only to a first predefined group, for example family. Correspondingly, access to presence information apart from location could be allowed also for a second predefined group, for example friends. Access to any other presence information could still be fully denied from any other PoC users.

With this configuration and assumption that presence authorization rules are applied when dynamic session is established, the usage of dynamic sessions would turn out to be very limited, or the privacy of the presence information would need to be compromised. For example, in the above example PS could include PoC user UE_{B} to the list without violating his privacy only if the inviting PoC user UE_{A} and any of the other invited PoC users were allowed to access his location data. Typically the definitions to allow access are made in a very controlled manner and the groups allowed with access to each others' presence information are small.

On the other hand, it would be in the interest of the inviting PoC user UE_{A} to extend the search as broadly as possible, otherwise such conditions and dynamic sessions would not make much sense. For example, in the above example the inviting PoC user UE_{A} could only reach with the condition a group of PoC users whose authorization rules identify each other in the first group, i.e. family members. However, it is clear that when setting up a dynamic session with condition containing the location criteria the initiator would typically like to invite other users than a subset of his family only.

In the PoC version currently under development it has been suggested that the invited user would give an anticipatory consent to become a member of a particular dynamic group. However, it is clear that giving such consent has only sense if the dynamic group exists for a long time. If the initiator sets up an ad-hoc PoC session using a condition as above, the invited user could not give the consent in advance since the group did not exist before the ad-hoc dynamic session set up. Basically ad-hoc dynamic sessions requiring consent given in advance would not be able to invite any participants at all. On the other hand, it may be generally established that giving general consent to be a participant in any dynamic session would have too big impact on the PoC user's privacy.

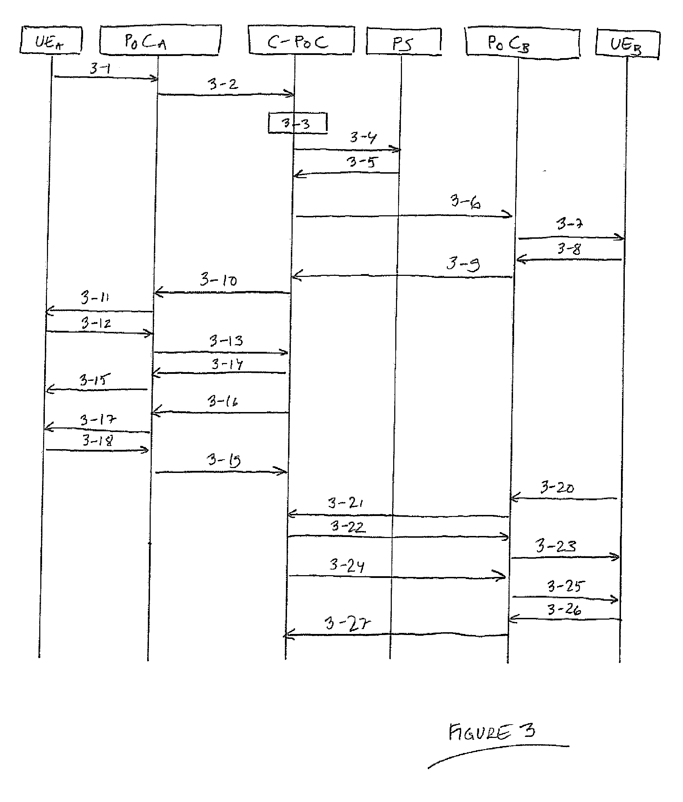

In embodiments of the present invention this problem is overcome by performing the search for potential participants without attending to the authorization rules implementing the privacy considerations of users but performing a procedure for protecting the privacy of the searched users before exposing their identity information to the other members of the group. An example of such procedure is illustrated with the signaling chart of Figure 3. The elements in Figure 3 correspond with the configuration shown in Figure 2, and the above use case of the dynamic session of the dynamic PoC group X is chosen as an example. In the present embodiment the operation of XDMS element and the SIP/IP Core are not substantially different than in the conventional solutions and accordingly their respective elements are not included in the flow chart. It should be noted that in Figures herein only steps and points necessary for illustrating the present embodiment are illustrated. The steps/points, signaling messages and related functions described may not necessarily be in absolute chronological order, and some of the steps/points may be performed simultaneously or in an order differing from the given one. Other functions can also be executed between the steps/points or within the steps/points and other signaling messages sent between the illustrated messages.

The procedure begins when the inviting PoC user UE_{A} decides to initiate a PoC Session towards a pre-arranged PoC group X that is also a dynamic PoC group. This means that the definitions for the PoC group X are stored in XDMS, but the definition does not associate a number of PoC user identities to the PoC group identity. Instead, the definitions state that the dynamic PoC Group X participants are to be defined with condition C1 "chess players with 10 km of Helsinki city center" and indicate that the maximum of 10 PoC Users may be invited. UE_{A} generates a PoC session invitation, sends (3-1) the invitation to the PoC server PoC_{A} performing the participating PoC function. PoC_{A} forwards (3-2) the invitation to the PoC server C-PoC performing the controlling PoC function.

C-PoC downloads (3-3) a definition for the PoC group X from Shared Group XDMS (not shown in the figure), and finds out it is a dynamic PoC group with condition C1: "chess players with 10 km of Helsinki city center". C-PoC transmits to the Presence Server a request (3-4) to provide 10 online PoC users, which satisfy the condition "chess players with 10 km of Helsinki city center".

According to the present embodiment, the search is performed regardless of the authorization rules concerning the information used as a basis for checking the condition C1 on validity to the dynamic group PoC X. Depending on the application, the PoC server may indicate explicitly in the request that the condition should be checked regardless of the privacy or authorization rules. In this case C-PoC would request PS to implement the search disregarding the fact whether the inviting PoC User has rights to see their Presence information or not. Such indication may be provided, for example, by means of an indication bit included in the response. Other indications are naturally possible without deviating from the scope of the claims. It is also possible to adjust the operation of the presence server PS such that it automatically makes the search without considering privacy issues or authorization rules whenever it detects that the request relates to a condition for searching members for a dynamic group. In such case an explicit indication from C-PoC is not necessary.

PS makes the search and provides (3-5) the ten PoC Users satisfying the condition "chess players with 10 km of Helsinki city center" to C-PoC. C-PoC generates a set of messages to the PoC users identified in the PS response. Figure 3 shows only information exchange between C-PoC and one of the invited PoC users UE_{B}. For a person skilled in the art it is clear that the exchange of information may be implemented in a similar way with the other invited PoC users. C-PoC sends the normal PoC session invitation through the PoC server PoC_{B} performing the participating PoC function of the invited PoC User UE_{B} (3-6) to UE_{B} (3-7). UE_{B} accepts the PoC session invitation and returns (3-8, 3-9) the positive response to C-PoC. The invited PoC User may request privacy in the response. Upon receiving the first positive response from an invited PoC User, C-PoC sends the positive response through PoC_{A} (3-10) to UE_{A} (3-11) and continues inviting other members of the group to the session.

At some stage of the procedure the inviting PoC user UE_{A} sends (3-12, 3-13) to C-PoC a subscription for the participant information of the established PoC Session in PoC group X. C-PoC provides (3-14, 3-15) a positive acknowledgement and thereafter a notification (3-16, 3-17) comprising participant information of the PoC session of PoC group X. However, according to the present embodiment, the privacy of the members is protected at this stage by hiding the true identity of the users. PoC specifications allow use of anonymous PoC addresses that are used instead of the true identity of the PoC user in case such privacy is needed. In the present embodiment, the invited PoC Users of the group session of PoC group X are considered anonymous and participant information of the dynamic session always contains their anonymous PoC Address instead of the real identity, regardless whether the privacy was requested by the participating PoC clients or not. Typically UE_{A} acknowledges (3-18, 3-19) the receipt of the notification.

Similarly, the invited PoC user UE_{B} may send (3-20, 3-21) to C-PoC a subscription for the participant information of the established PoC Session in PoC group X. C-PoC provides (3-22, 3-23) a positive acknowledgement and thereafter a notification (3-24, 3-25) comprising participant information of the PoC X group session. Correspondingly, the true identity of the participating members of the group are hidden by means of anonymous identities. Typically also UE_{B} acknowledges (3-26, 3-27) the receipt of the notification.

By means of the proposed procedure the members of the group may be searched from a large group of users and the possibility to find appropriate matches increases significantly. This is achieved without compromising the privacy of the system. Specifically, the arrangement is straightforward and does not require any interaction with the privacy settings within the server system.

It should be noted that although the servers have been disclosed here as one entity, the servers may be implemented in one or more physical or logical entities without deviating from the scope of protection. For example, in OMA architecture specifications, user-specific information is stored in the presence server and the authorization rules are stored in a presence XDM server. For a person skilled in the art implementation of the search for potential participants without attending to the authorization rules is clear both in integrated and distributed structures.

In another embodiment of the invention, the message flow as such is by far the same as the one described in connection with Figure 3. However, instead of hiding all the identities, a selection for use of true or anonymous identities is made on the basis of the authorization rules settings of the users. When evaluating the condition C1 of the dynamic session, the relevant server fetches for each participant also the authorization data containing the information.

For example, in the above case of presence information, PS searches for the matching PoC user presence information, and at the same checks who has the permission to see the presence, location, and profile data of the participant. PS provides this information to C-PoC. In operations of the Group X PoC session C-PoC provides the real user identity of a participant to another member of the group session only if the other member as a participant information watcher has the permission to see the relevant data, for example presence, location or profile information, presently used as the basis in checking the condition. The identities of other participants that fit to the condition but whose authorization rules do not allow exposure to other members of the group are not disclosed. Advantageously they are treated in the group session as anonymous participants. Specifically, this alternative arrangement allows users to appear with their true identity, and thus maintain consistency in user-specific level of privacy.

In a further embodiment of the invention, the message flow as such is still by far the same as the one described in connection with Figure 3. However, instead of hiding all the identities, C-PoC includes in the session invitation (3-6) to the invited participant UE_{B} a flag that may include the whole condition and indicate that the session is a dynamic session in which the presence, location, profile data of the invited participants may end up being disclosed. Based on the flag presence in the session invitation, the invited participant UE_{B} may become aware of the possible sensitive information disclosure and decide to request privacy in the response (3-8, 3-9) to the invitation. Specifically, this alternative arrangement allows dynamic decision according to the request at hand. For example, when the invited PoC user UE_{B} receives an invitation to a dynamic session with a condition that seems trustworthy, the user may choose to let the other members see his true identity (e.g. chess players). However, in case the definition is more general (e.g. females around 25), the user may prefer to attend with an anonymous identity.

It should be noted that PoC is disclosed here as an example of a service enabling technology that is designed to allow group communication activities such that members to the group are selected on the basis of selection condition. It is clear that the invention may be applied to other service enabling technologies, as well.

For example, Converged IP Messaging (CPM) is a messaging framework that accommodates different user experiences such as deferred and immediate messaging, session-based messaging, and half duplex / full duplex conferencing. It aims at consolidating common functionalities of existing messaging services and new features introduced by the convergence of communications brought by SIP-based technologies. It also interacts with other OMA enablers such as Presence and XDM. Instant messaging (IM) is a form of real-time communication between two or more people based on typed text.

Both IM and CPM allow the users to establish sessions similarly as PoC. The session establishment is in SIMPLE/IM and CPM the same as in PoC and the dynamic sessions can be applicable to them too. The difference is the Media Type used in the User Plane. For example, instead of exchanging half-duplex audio bursts in the session as defined in PoC, OMA SIMPLE/IM specifications state that the messages (both text and multimedia) are exchanged. Correspondingly, in addition to exchanging half-duplex audio bursts in the session as defined in PoC, OMA CPM specifications state that the messages (both text and multimedia), full duplex audio and full duplex video can be exchanged. However, a person skilled in the art can easily apply the above disclosed mechanisms for selecting the members to the group and protecting the privacy of the selected members also to these, and a variety of other applicable technologies, as well.

In addition, in the above example using PoC service a session was established in order to allow exchange of information between the members of the group. It should be noted that the invention is applicable also to procedures that do not involve session establishment. For example, OMA SIMPLE/IM and OMA CPM also allow the users to send a single message without session towards a user or a group. The proposed solution can also be applied to this type of group communication activity.

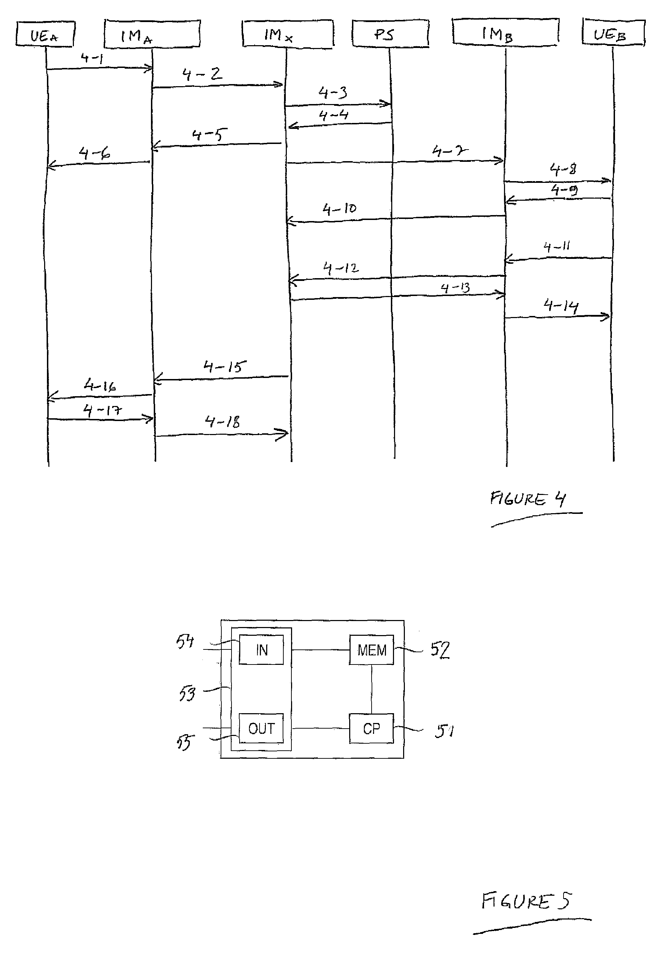

An example of the corresponding procedure is illustrated with the signaling chart of Figure 4. The elements in Figure 4 correspond with the configuration shown in Figure 2, but since instant messaging is used as an example the PoC servers are replaced by IM servers. The procedure begins when the sending IM client UE_{A} decides to deliver an instant message towards group R and also requests a confirmation about the delivery of the instant message to the members of group R. Such a confirmation is also called as an instant message delivery notification. The message is addressed to a dynamic IM group R. This means that the definitions for the IM group R are stored in XDMS, but the definition does not associate a number of IM client identities to the IM group identity. Instead, the definitions state that the dynamic IM Group R participants are to be defined with condition C1 "chess players with 10 km of Helsinki city center". UE_{A} generates an IM message, and sends (4-1) the message to the IM home server IM_{A}. IM_{A} forwards (4-2) the message to an IM server IM_{X} that owns the predefined group IM.

As in the PoC embodiment, IM_{X} downloads a definition for the IM group R from Shared Group XDMS (not shown in the figure), and finds out it is a dynamic IM group with condition C1: "chess players with 10 km of Helsinki city center". IM_{X} transmits to the Presence Server a request (4-3) to provide 10 online IM clients, which satisfy the condition "chess players with 10 km of Helsinki city center".

According to the invention, the search is again performed regardless of the authorization rules concerning the information used as a basis for checking the condition C1 on validity to the dynamic IM group R. PS makes the search and provides 4-4) the ten IM clients satisfying the condition "chess players with 10 km of Helsinki city center" to IM_{X}. IM_{X} tr/4-5, 4-6) transmits an acknowledgement to the received request to IM_{A} and transmits the IM message towards the IM clients identified in the PS response. Figure 4 shows only information exchange between IM_{X} and one of the receiving IM clients UE_{B}. For a person skilled in the art it is clear that the exchange of information may be implemented in a similar way towards the other receiving IM clients. IM_{X} sends the IM message through the home IM server IM_{B} of the receiving IM client UE_{B} (4-7) to UE_{B} (4-8). UE_{B} accepts the IM message and returns (4-9, 4-10) the positive response to IM_{X}. UE_{B} also acknowledges the IM message by sending (4-11, 4-12) an instant message delivery notification to IM_{X}. IM_{X} confirms (4-13, 4-14) the reception of the aggregated instant message delivery notification by sending a response.

At some point, for example after a predefined period or when IM_{X} has all the instant message delivery notifications from all the receiving IM Clients, IM_{X} sends to the sending IM Client an aggregated instant message delivery notification (4-15, 4-16) containing the individual instant message delivery notifications from the individual receiving IM Clients. Unless the receiving IM User had requested privacy in their acceptance messages (4-9, 4-10) messages, the address of the receiving IM User is disclosed in the individual instant message delivery notification. The sending IM client UE_{A} confirms (4-17, 4-18) the reception of the aggregated instant message delivery notification by an Accepted response.

According to the invention, in the present embodiment the privacy of the receiving users are protected before the aggregated instant message delivery notifications are delivered to the sending IM client. In line with the examples discussed with the PoC embodiment, the recipient addresses in the individual instant message delivery notifications may by default be replaced with anonymous addresses. Alternatively, if it is detected (for example in IMₓ) that the sending IM User does not have rights to see presence information of a receiving IM User, the recipient address in the individual instant message delivery notification may be replaced with an anonymous address. If the sending IM User has rights to see Presence information of a receiving IM User, then the receiving IM User anonymity may be based on receiving IM User decision in 4-9,4-10.

It is also possible to configure IMx to send the normal instant message to the receiving IM User with a special indication warning that this is an instant message to a Dynamic Group and there is a danger of disclosing the real receiving IM User address. The receiving IM Client UE_{B} thus becomes aware of the problem and can decide to request privacy, for example by including a special indication to the Accepted response (4-9, 4-10).

It should be noted that also the presence information and presence service are used her as an example only. The condition of the dynamic session may be defined for other types of user-specific information without deviating from the scope of protection. Additionally, the condition may be based on information maintained in more than one location and accessible through more than one server. For example, the condition may comprise a sub-condition for a piece of operator's subscriber information and a sub-condition for a piece of presence information, and the condition is only met in case of both the sub-conditions are met.

In addition, the identity of a participating user may be hidden in other ways without deviating from the scope of protection. In PoC systems use of anonymous identity provides an easily applicable method for hiding true identities when necessary. However, in other systems and technologies other arrangements may be applicable. For example, the server utilizing the information may be configured to include in the participant information a special indication. The user terminal may detect this indication and refrain from displaying the true identity of the participant. Alternatively, based on the indication the PoC Server performing the participating PoC function may hide the true identities of the participants.

Figure 5 illustrates an exemplary hardware configuration for the implementation of an embodied device, for example applicable as the PoC server or presence server of Figure 2. The device comprises a control unit 51, an element that comprises an arithmetic logic module; a number of special registers and control circuits. Connected to the processing unit is a memory unit 52, a data medium where computer-readable data or programs or user data can be stored. The memory means typically comprise memory modules that allow both reading and writing (RAM), and memory modules whose contents can only be read (ROM). The unit also comprises an interface block 53 with input unit 54 for inputting data for internal processing in the element, and output unit 55 for outputting data from the internal processes of the element.

Examples of said input unit 54 comprise plug-in units acting as a gateway for information delivered to its external connection points. For receiving information from the operator, the input unit 54 may also comprise a keypad, or a touch screen, a microphone, or the like. Examples of said output unit 55 include plug-in unit feeding information to the lines connected to its external connection points. For outputting information to the operator, the output unit 55 may also comprise a screen, a touch screen, a loudspeaker, or the like.

The control unit 51, memory unit 52, and interface block 53 are electrically interconnected to perform systematic execution of operations on received and/or stored data according to predefined, essentially programmed processes of the element. In solutions according to the embodiments of the invention, these operations comprise functions for implementing the logical units, operations and interfaces of the PoC server and presence server elements, as described above.

It will be obvious to a person skilled in the art that, as the technology advances, the inventive concept can be implemented in various ways. The invention and its embodiments are not limited to the examples described above but may vary within the scope of the claims.

## Claims

1. A method, comprising
maintaining in a telecommunication system user-specific information and associated one or more authorization rules defining availability of parts or all of the user-specific information to other users of the telecommunication system;
determining members for a group communication activity by comparing the user-specific information of users of the telecommunication system to a selection condition;
performing the group communication activity; **characterized by**
comparing the selection condition with the user-specific information of users regardless of the associated authorization rules;
selecting a user as a member of the group communication activity when the user-specific information matches the selection condition;
hiding the identity of at least one user of the selected users from at least some other members of the group communication activity.

2. The method according to claim 1, **characterized by**
hiding the identity of a user by generating for the user an anonymous identity, and using this anonymous identity in communication activities of the group.

3. The method according to claim 2, **characterized by**
generating the anonymous identity at least to users whose authorization rules define at least a piece of the user-specific information that is relevant for determining the members for the group communication activity not to be available to one or more users of the telecommunication system;
forwarding this anonymous identity in communication activities of the group at least to those one or more users of the telecommunication system.

4. The method according to claim 2, **characterized by** generating the anonymous identity to all members of the group communication activity.

5. The method according to claim 1, **characterized by**
inviting the selected users as members to the group session;
providing a privacy warning to the selected users in connection with the invitation.

6. The method according to claim 5, **characterized by**
including in the privacy warning the selection condition;
receiving from a user an indication to accept invitation to the group session and a request of privacy:
hiding the identity of the user in the group session in response to the received request of privacy.

7. The method according to claim 1, **characterized by**
transmitting a message towards members of the group;
receiving delivery notifications from one or more members of the group;
hiding the identity of at least the one or more members in the delivery notifications.

8. A network node for a telecommunication system, comprising
an interface unit configured to receive a request for a group communication activity;
a control unit configured to determine the request to be associated with a group communication activity to which members are selected by comparing user-specific information of users to a selection condition;
the control unit being further configured to retrieve a group of members to the group communication activity; **characterized by**
the control unit being further configured to retrieve also associated authorization rules of the group of members, the authorization rules defining availability of parts or all of the user-specific information to other users of the telecommunication system;
the control unit being further configured to generate an anonymous identity at least to users whose authorization rules define at least a piece of the user-specific information that is relevant for determining the members for the group session not to be available to one or more users of the telecommunication system;
the control unit being further configured to forward this anonymous identity in communication activities of the group at least to those one or more users of the telecommunication system.

9. The network node according to claim 8, **characterized by** the control unit being further configured to generate an anonymous identity to all members of the group communication activity.

10. The network node according to claim 8, **characterized by**
the control unit being further configured to invite the selected users as members to a group session for exchange of information between the members of the group, and
the control unit being further configured to provide a privacy warning to the selected users in connection with the invitation.

11. The network node according to claim 10, **characterized by**
the control unit being further configured to include in the privacy warning the selection condition;
the control unit being further configured to receive from a user an indication to accept invitation to the group session and a request of privacy; and
the control unit being further configured to hide the identity of the user in the group session.

12. The network node according to claim 9, **characterized by**
the control unit being further configured to deliver a message to the members of the group; and
the interface unit being further configured to receive delivery notifications from one or more members of the group;
the control unit being further configured to hide the identity of at least the one or more members in the delivery notifications.

13. The network node according to any of the preceding claims 8 to 11, **characterized by** the network node being configured to perform operations of a PoC server, an IM server, or a CPM server.

14. The network node according to claim 12, **characterized by** the network node being configured to perform operations of an IM server, or a CPM server.

15. A network node for a telecommunication system, comprising:
a memory unit configured to maintain user-specific information and associated authorization rules defining availability of parts or all of the user-specific information to other users of the telecommunication system;
an interface unit configured to receive a request comprising a selection condition;
a control unit configured to compare, in response to the received request, the selection condition with the user-specific information of users, ,
**characterized by**
the control unit being further configured to compare the selection condition with the user-specific information of users regardless of the associated authorization rules;
the control unit being further configured to generate a response identifying a group of users, a user being selected in response to the user-specific information matching the selection condition;
the interface unit being configured to transmit the response to a defined network node.

16. The network node according to claim 15, **characterized by** the network node being configured to perform operations of a presence server.

17. A computer program product readable by a computer and encoding a computer program of instructions for executing a computer process for communication, the process including:
receiving a request for a group communication activity;
determining the request to be associated with a group communication activity to which members are selected by comparing user-specific information of users to a selection condition;
retrieving a group of members to the group communication activity;
retrieving also associated authorization rules of the group of members, the authorization rules defining availability of parts or all of the user-specific information to other users of the telecommunication system;
generating an anonymous identity at least to users whose authorization rules define at least a piece of the user-specific information that is relevant for determining the members for the group session not to be available to one or more users of the telecommunication system;
forwarding this anonymous identity in communication activities of the group at least to those one or more users of the telecommunication system.

18. A computer program product readable by a computer and encoding a computer program of instructions for executing a computer process for communication, the process including:
maintaining user-specific information and associated authorization rules defining availability of parts or all of the user-specific information to other users of the telecommunication system;
receiving a request comprising a selection condition;
comparing, in response to the received request, the selection condition with the user-specific information of users;
comparing the selection condition with the user-specific information of users regardless of the associated authorization rules;
generating a response identifying a group of users, a user being selected in response to the user-specific information matching the selection condition;
transmitting the response to a defined network node.
